# EUROPEAN PATENT SPECIFICATION

(11) **EP 3 681 000 B1**
(45) Date of publication and mention of the grant of the patent: **22.09.2021**
(21) Application number: 20151395.9
(22) Date of filing: 13.01.2020
(51) Int. Cl.: H02G 3/04, H02G 3/38

(54) **A MOUNTING BOX FOR MOUNTING AN ELECTRICAL DEVICE INTO A CAVITY OF A WALL**
INSTALLATIONSDOSE ZUM INSTALLIEREN EINES ELEKTRISCHEN GERÄTS IN EINER ÖFFNUNG EINER WAND
BOÎTIER DE MONTAGE POUR LE MONTAGE D'UN APPAREIL ÉLECTRIQUE DANS UNE CAVITÉ DANS UNE PAROI

(30) Priority: 11.01.2019 BE 201905019
(43) Date of publication of application: 15.07.2020
(73) Proprietor: SHIVER, 9308 Aalst (BE)
(72) Inventor: De Backer, Bart, 9308 Aalst (BE)
(74) Representative: Gevers Patents

(56) References cited:
- EP-A1- 1 513 238
- EP-A2- 1 988 613
- DE-A1-102016 125 036
- DE-U1-202007 003 629
- DE-U1-202007 003 629
- DE-U1-202014 006 817
- DE-U1-202014 006 817

## Description

The present invention relates to a mounting box for mounting an electrical device such as a wirelessly controlled actuator for home electronics systems, into the cavity of a wall, such as a floor. The present invention also relates to a method for mounting an electrical device into the cavity of the wall in a time-efficient manner.

### Prior art

The present invention relates to the field of construction, more in particular to installing electrical devices such as wirelessly controlled actuators for home electronics systems into a wall, in particular into a horizontal wall, such as a floor or ceiling, in particular into a floor or ceiling, in particular into a concrete floor. The invention relates in particular to installing mounting boxes for said electrical devices into a wall in the structural construction phase of a building's construction. Mounting boxes for mounting electrical devices in a wall are known in the state of the art. The patent publications EP1988613, DE202014006817, EP1513238 or DE202007003629 disclose such a mounting box. Installing electrical devices requires several time-consuming operations and several phases of intervention by experts.

In particular, a first expert, for instance a stone grinder, needs to come to the building site to provide the naked wall, for instance a first part of the wall not yet provided with the finishing layer, such as the cement layer, for instance a part comprising 'prefab' channel plates, with the cavity for accommodating the mounting box. To that end, the stone grinder grinds a cavity through the naked wall, for instance penetrates the naked wall from a top surface exposed to an upper floor during the structural construction phase, to a bottom surface exposed to a lower floor, for instance, depending on the required diameter of the cavity, using a water-cooled drill. Preferably, the cavity extends in an axial direction which is substantially vertical, so as to ensure structural stability. Installing the electrical wiring over the top surface of the naked wall, installing the mounting box into the cavity and inserting the electrical wires into the mounting box requires the intervention of another expert, such as an electrician. The mounting box comprises an outer body provided with outer walls enclosing a first volume for housing the electrical device, wherein the outer walls are provided with at least one sidewall extending in an axial direction between a top surface and a bottom surface, and wherein the outer walls are provided with an opening facing in the axial direction near the top surface of the sidewalls of the outer body, wherein the opening is arranged, in use, as a passage for electrical wires into the outer body. In particular, the electrician inserts a mounting box in such a way that it extends from the top surface to the bottom surface of the naked wall, so that the top surface and bottom surface of the outer body of the mounting box are substantially at the level of the top surface and bottom surface of the naked wall, respectively. The electrician then inserts the electrical wires into the mounting box through the opening in the outer walls of the outer body. Finally, the electrician covers the opening in the outer walls of the outer body, for instance by installing a cover plate over the opening. The cover plate is arranged to try and prevent finishing material, such as cement, from flowing from the upper floor to the lower floor in a subsequent phase in the construction. Next, a finishing layer of a given thickness, for instance a cement layer, is applied, for instance poured, onto the naked wall by another expert.

The cement thereby covers the electrical wires lying on the naked wall, and also covers the mounting box, in particular the cover plate covering the opening in the outer walls of the outer body. Finally, the electrical device, for instance the wirelessly controlled actuator, needs to be installed into the mounting box. To that end, another expert, such as an electrician, needs to come on site for connecting the electrical device through an opening in the bottom surface of the electrical device, which bottom surface is accessible through the bottom surface of the wall not covered by the finishing layer, for instance through the ceiling of the lower floor. In particular, the electrical device is the wirelessly controlled actuator for home electronics systems. The actuator is then connected, for instance through the bottom surface of the wall not covered by the finishing layer, for instance through the ceiling of the lower floor, to a user device such as a lamp or a fan, so as to be wirelessly controllable by the actuator.

It turns out, however, that already in the structural construction phase, immediately after installing the mounting boxes, there is a desire to test if the electrical devices, such as the wirelessly controlled actuator, function correctly. Moreover, there is a wish to be able to use the working electrical devices already during the structural construction phase, so that, for instance, there is already light etc. present in and after the structural phase. Furthermore, it is desirable for the expert, in particular the electrician, who is qualified for installing the electrical wiring and building in the mounting boxes, to also perform other operations for which they are qualified in the same phase, particularly installing the electrical devices, so that the expert does not need to return in a later phase. However, in the mounting boxes from the art, the electrical devices will not yet be installed into the mounting boxes during the structural construction phase, since the electrical device, more so than the electrical wires, is sensitive to moisture and liquids. During the structural construction phase, the building site is exposed to weather conditions. Moisture and water, for instance rain, penetrate the mounting boxes, despite the presence of the cover plate over the opening in the outer wall of the outer body. Moreover, finishing material enters the inner body during the application of the finishing layer, despite the presence of the cover plate over the opening in the outer wall of the outer body.

The patent publication DE202007003629 discloses a mounting box (Fassadenkonsruktion 1) for mounting an electrical device (Steckdose 15) in a substantially vertically extending cavity (Aussparung 7) of a wall (Fassadenprofil 2), the mounting box (1) comprising: an outer body (Halter 8), arranged to be mounted, in use, into the cavity (7) of the wall (2), wherein the outer body (8) is provided with outer walls (Shenkel 9) enclosing a first volume, wherein the outer walls (9) are provided with at least one sidewall (Boden 10) extending in an axial direction, wherein the axial direction, in use, lies in the vertical direction of the cavity (7), and wherein the outer walls (9) are provided with an opening (Kabelkanal 5) facing in the axial direction in use, arranged as a passage for electrical wires (Kabel 18) in the outer body (8), and wherein the mounting box further comprises an inner body (Gehausekasten 13), arranged to be mounted, in use, into the first volume of the outer body (8), wherein the inner body (13) is provided with inner walls enclosing a second volume, wherein the second volume is arranged for receiving the electrical device (15), wherein the inner walls are provided with at least one sidewall extending substantially along the axial direction, and wherein the at least one sidewall of the inner body (13) comprises an opening (Offnung 14) through which, in use, the electrical wires (18) are connected to the electrical device (15).

### Description of the invention

The present invention offers a solution to the problem from the prior art. More in particular, the present invention provides in a mounting box which reduces the number of time-consuming operations and the number of expert interventions for installing electrical devices, such as a wirelessly controlled actuator, into a wall, in particular a horizontal wall, such as a ceiling or a floor. In particular, the present invention provides the mounting box which allows the installation of electrical devices into a wall during the structural construction phase in a building's construction. To that end, the present invention provides a mounting box according to the first claim, for mounting an electrical device into a substantially vertically extending cavity of a wall, in particular a naked wall, before applying a finishing layer onto the naked wall. The mounting box comprises an outer body arranged to be mounted, in use, into the cavity of the wall. The outer body is provided with outer walls enclosing a first volume, wherein the outer walls are provided with at least one sidewall extending in an axial direction, for instance between a top surface and a bottom surface. The axial direction is, in use, the vertical direction of the cavity. The outer walls are provided with an opening facing in the axial direction, for instance in the top surface of the outer walls of the outer body. The opening is arranged, in use, as a passage for electrical wires into the outer body. In particular, the outer walls form a shaft, for instance a cylindrical shaft, at least provided with a sidewall and one axially oriented opening. The mounting box also comprises an inner body arranged to be mounted, in use, in the first volume of the outer body. The inner body is provided with inner walls enclosing a second volume, wherein the second volume is arranged for receiving the electrical device. The inner walls are provided with at least one sidewall extending substantially along the axial direction, wherein the at least one sidewall of the inner body comprises an opening through which, in use, the electrical wires are connected to the electrical device. The electrical wires are, for instance, brought from the first volume into the second volume when installing the electrical device, in particular by the electrician. In particular, the inner walls form a shaft, for instance a cuboid shaft, comprising at least one sidewall, for instance, in the case of a cuboid shaft, four sidewalls, and at least one opening arranged in at least one of the at least one sidewall. The inner body is further provided with an awning. The awning is provided with a bottom surface and a top surface, for instance with a normal partly facing the bottom surface of the wall and a normal partly facing the top surface of the wall, respectively. The awning is positioned in such a way in relation to the inner walls that liquid, for instance moisture, rain or finishing material, reaching the inner body through the opening in the outer walls is led away from the opening in the inner walls.

The mounting box of the present invention offers the advantage that it is arranged for accommodating the electrical device, such as the wireless actuator, in less optimal conditions than those for which the electrical device is designed. In particular, the electrical device may already be inserted into the cavity of the naked wall in the structural construction phase, for instance by the electrician. Any moisture or rain entering the first volume of the outer body, for instance through the cover plate, for instance through the opening the cover plate needs to provide for allowing the passage of the electrical wires into the first volume, is led through the inner body from the first claim, away from the opening in the inner walls in the inner body. Moreover, any finishing material seeping in, such as cement applied onto the naked wall towards the end of the structural construction phase, is led away from the opening in the inner walls of the inner body. This offers the advantage that the electrician does not need to return for installing the electrical device after the structural construction phase. The number of time-consuming operations and the number of interventions of experts for installing electrical devices, such as a wirelessly controlled actuator, into a wall, is thereby drastically reduced.

An additional advantage of the mounting box according to the present invention is that the electrical device, in particular the wirelessly controlled actuator, as well as user devices such as a lamp connected to the actuator, may already be tested and used in the structural building phase. In the mounting box according to the present invention, the electrical device is optimally protected against moisture and liquid, which during the structural construction phase can easily seep into the first volume of the outer walls.

According to the invention, the awning projects relative to the sidewall of the inner walls, in which sidewall the opening is provided. This prevents liquid from dripping into the opening of sidewall of the inner body. In an embodiment of the present invention, the normal of the opening in the sidewall of the inner walls is oriented according to an opening direction, for instance, the opening is located in a plane having a normal in the opening direction. In an embodiment, the awning protrudes at least in the opening direction relative to the sidewall of the inner walls.

In an embodiment of the present invention, the at least one sidewall of the inner walls comprises a top surface and a bottom surface. In particular, the top and bottom surfaces are the free edges of the sidewall. In an embodiment of the present invention, the inner walls of the inner body comprise an upper wall and preferably also a lower wall, connected to the top surface and bottom surface of the sidewall, respectively. In an embodiment of the present invention, the bottom surface of the awning is supported on the top surface of the sidewall of the inner walls, for instance wherein the awning is part of the upper wall and wherein the upper wall projects relative to the sidewall to form the awning. The embodiment in which the bottom surface of the awning is supported on the top surface of the sidewall of the inner walls, and in particular the embodiment in which the awning is part of the upper wall, offers the advantage that the position of the awning, for instance the axial position of the awning, for instance relative to the bottom surface of the sidewall of the inner walls, can be adjusted in an efficient manner. The embodiment is especially advantageous when compared to the alternative embodiment in which the awning vast is connected to the sidewall of the inner body, for instance is connected to the sidewall in a prefabricated manner. The inventors have found that the sidewall of the inner body can easily be sawn to the desired length, for instance according to the desired size of the second volume in view of the size of the electrical device. In particular, this embodiment offers the advantage that the top surface of the awning can form a sloping surface, the normal of which comprises at least one component perpendicular to the axial direction, preferably with the component substantially lying in the direction opposite to the opening direction. The sloping surface is preferably arranged to drain off liquid towards a ledge in a direction away from the opening in the sidewall of the inner walls. In particular, the angle between the awning and the sidewall of the inner body in which the opening is provided, is an obtuse angle. As a result of this, liquid dripping towards the opening in the sidewall is diverted to the opposing sidewall of the inner body, where, for instance, the ledge starts. This avoids the risk of liquid being diverted towards the free, protruding edge of the awning, along which it may still, for instance, end up in the opening of the sidewall of the inner body.

In an embodiment of the present invention, one of the at least one sidewall of the inner walls is provided with the ledge, wherein the ledge extends mainly in the axial direction. In particular, the ledge is provided on a sidewall opposite the sidewall in which the opening is provided, or if the inner walls comprise only one, for instance cylindrical sidewall, at a position of the sidewall opposite the position of the sidewall where the opening is located. In an embodiment of the present invention, the ledge is an axial groove, wherein the axial groove is provided in the sidewall of the inner walls. In an alternative embodiment, the ledge is an axial protrusion, in particular a protrusion projecting relative to the sidewall and extending in the axial direction, wherein the axial protrusion is provided on the sidewall of the inner walls. The axial protrusion forms two axial grooves on either side of the protrusion between the protrusion and the sidewall. The axial ledge leads the liquid towards the bottom surface of the sidewalls of the inner body, and hence towards the bottom surface of the outer body, for instance towards the bottom surface of the wall, so as to be removed from the mounting box.

In an embodiment of the present invention, the awning, in use, in particular when the inner body is placed into the first volume of the outer body, joins the outer walls in a liquid tight way. In particular, the free, protruding edge of the awning joins the outer walls. The embodiment ensures that any liquid flowing down the outer walls is prevented from coming in the vicinity of the opening in the sidewall of the inner body, due to it being collected and diverted by the awning. In an embodiment, the inner body is provided with at least one closing wall extending in the axial direction. The at least one closing wall is connected to the inner walls of the inner body, for instance to at least one of the at least one sidewall, for instance connected in a liquid tight way, for instance connected integrally, to the inner walls of the inner body. In use, for instance when the inner body is placed into the first volume of the outer body, the at least one closing wall joins the outer walls and the awning in a liquid tight manner, in such a way that a dry space is created around the opening in the sidewall of the inner body. The dry space is separated from the rest of the first volume of the outer body by at least the awning and the at least one closing wall. As a result, moisture and liquid are optimally kept out of the immediate vicinity of the opening in the sidewall of the inner body. In order to get the electrical wires from the first volume into the dry space, in an embodiment of the present invention, one of the at least one closing walls is provided with a pass-through opening through which in use, for instance when inserting the inner body into the first volume of the outer body, the electrical wires are inserted into the dry space. The pass-through opening is provided at a first distance in the axial direction relative to the awning. The opening in the sidewall of the inner body is provided at a second distance in the axial direction relative to the awning, wherein the first distance is greater than the second distance. This embodiment performs even better to prevent liquid, such as rain or finishing material, from penetrating into the opening in the sidewall of the inner body. That is because in this embodiment, any liquid that still manages to get through the pass-through opening and into the dry space, is prevented from dripping further into the opening of the sidewall. Indeed, the liquid cannot drip further from a lower position to a higher position. The distances of the openings relative to the awning are preferably the distances between the awning and the upper edge of the openings.

In an embodiment of the present invention, the outer walls of the outer body comprise a second opening, opposite the first opening of the outer walls, through which in use the inner body is inserted into the outer body. In particular, the outer body, when placed into the cavity of the wall, extends from the top surface of the naked wall to the bottom surface of the naked wall, wherein the first opening and the second opening of the outer walls are located at the level of the top surface and the bottom surface of the naked wall, respectively. In the structural construction phase, in particular before the finishing layer is applied onto the naked wall, the first opening and the second opening of the outer body are accessible through the top surface and the bottom surface of the wall, respectively, in particular through the floor of the naked wall on the upper floor and the ceiling of the lower floor, respectively. In an embodiment of the present invention, the inner walls of the inner body comprise a flange. Preferably, the at least one sidewall of the inner walls comprises a top surface and a bottom surface, and the flange is connected, for instance connected integrally connected, to the bottom surface of the sidewall of the inner body. In use, for instance when the inner body is inserted into the first volume of the outer body, the flange closes off the second opening of the outer body. Preferably, the flange is provided with a flange opening. The flange opening, in use, is arranged as a passage for electrical wires connected to the electrical device, in particular for leading the electrical wires out of the first volume. The flange opening is preferably provided in the dry space. Preferably, the flange also comprises a further flange opening, not provided in the dry space, preferably provided where the ledge ends. The further flange opening is for instance a liquid draining opening, arranged for removing the diverted liquid from the first volume. In an embodiment of the present invention, the inner body is secured inside the outer body by the flange of the inner body pressing against the sidewall of the outer body, for instance by friction or by means of a pressure mechanism. The pressure mechanism is for instance an expansion element provided on the flange of the inner wall, wherein the expansion element expands the flange against the sidewall of the outer body, for instance as a result of the electrician screwing the expansion element tighter.

In an embodiment of the present invention, the sidewall of the outer body is provided with a flange at the level of the first opening of the outer walls. The flange of the outer body, in use, retains the outer body in the cavity of the wall as a result of the flange resting on the wall, in particular resting on the top surface of the naked wall. In an embodiment of the present invention, the mounting box comprises a cover plate for covering the first opening of the outer walls in use. Preferably, the cover plate is a covering box enclosing the first opening, wherein the sidewalls of the covering box are provided with cable openings arranged for allowing electrical wires to pass through in use. Providing the covering box with cable openings in the sidewall, as opposed to in the upper wall, ensures that liquid cannot penetrate as easily through the cable openings into the first volume of the outer body.

In an embodiment of the present invention, the electrical device is provided in the second volume of the inner body. The electrical device is preferably already placed into the second volume before inserting the inner body into the outer body. In an embodiment of the present invention, the electrical device is an actuator. Preferably, the electrical device is a wirelessly controllable actuator, due to the electrical device further comprising a signal receiver by means of which the actuator is controlled wirelessly.

In an embodiment of the present invention, the cavity penetrates the wall, in particular the naked wall, from the top surface to an opposing lower bottom surface, preferably substantially in a vertical direction. Preferably, the first and second openings of the outer body of the mounting box are provided at the level of the top surface and bottom surface of the naked wall, respectively. In this way, it becomes very easy for the electrician to insert the electrical wires into the first volume and to insert the inner body into the first volume through the top surface and the bottom surface of the naked wall, respectively. Next, the electrician can easily connect the user device to the electrical device, for instance by pulling further electrical wires of the electrical device through the flange opening in the flange of the inner body provided to that end.

In an embodiment of the present invention, the wall is provided with a metallic reinforcement layer at a height Hₘₑₜₐₗ in the axial direction relative to the bottom surface of the wall, for instance the naked wall. The metallic reinforcement layer is for instance steel wires reinforcing the naked wall. Preferably, the signal receiver of the electrical device is located at a height H_{signal} in the axial direction relative to the bottom surface of the wall, for instance the naked wall, and the height H_{signal} is smaller than the height Hₘₑₜₐₗ. The inventors have found that the metallic reinforcement layer would disrupt the wireless control of the inner body if the signal receiver of the electrical device were located at the same height as, or higher than the metallic reinforcement layer. Therefore, the signal receiver, in use, is preferably adjacent to the bottom surface of the wall, more in particular the bottom surface of the naked wall.

The invention further relates to a wall provided with a cavity into which the mounting box is inserted, in particular into which the outer body is inserted, and into which, preferably, the inner body is inserted as well. The invention relates to both a naked wall and a finished wall, wherein the naked wall is covered with a finishing layer such as cement. In certain preferred embodiments in which the mounting box is inserted into the naked wall, the top and bottom surfaces of the wall are the top and bottom surfaces of the naked wall. In certain embodiments in which the mounting box is inserted into the finished wall, the top and bottom surfaces of the wall are the top and bottom surfaces of the finished wall.

The invention also relates to a method for mounting an electrical device, such as a wirelessly controlled actuator for home electronics systems, into a cavity in a wall, wherein the method comprises the following steps:
- providing the mounting box as discussed above, wherein the electrical device is secured inside the inner body, in particular inside the second volume in the inner body,
- working the wall to form the cavity, preferably through the entire thickness of the wall,
- installing the outer body of the mounting box into the cavity, preferably so that the first and the second opening of the outer body are located at the level of the top and bottom surfaces of the wall, respectively,
- inserting the inner body into the first volume of the outer body, preferably through the second opening in the outer body
- inserting electrical wires into the first volume of the outer body, preferably through the first opening in the outer wall, and connecting the electrical wires to the electrical device.

In a preferred embodiment of the present invention, the wall in the method described above is a naked wall. The naked wall is in particular the wall during the structural construction phase, when the wall is not yet provided with a finishing layer such as a cement layer. The top and bottom surfaces of the wall then preferably refer to the top and bottom surfaces of the naked wall. After the mounting box has been inserted into the naked wall, and after the finishing layer has been applied onto the naked wall, in particular the top surface of the naked wall, the mounting box is no longer accessible through the first opening, in particular through the floor on the upper story.

### Figures

Figure 1 shows a cross section of the mounting box such as inserted into the naked wall
Figure 2 shows the first opening in the outer body of the mounting box
Figure 3 shows a perspective view of inner body of the mounting box in which electrical wires are coupled to the electrical device
Figure 4 shows a rear view of the inner body of the mounting box from figure 3 without electrical wires

### Description of the figures

The present invention will hereafter be described with respect to particular embodiments and with reference to certain drawings, but the invention is not limited thereto and is only defined by the claims. The drawings shown are only schematic depictions and are not limiting. In the drawings, the size of certain elements may be exaggerated, meaning that the parts in question are not drawn to scale, being for illustrative purposes only. The dimensions and the relative dimensions do not necessarily correspond to actual reductions to practice of the invention.

The term "comprising" and derivative terms, as used in the claims, should not be interpreted as being restricted to the means listed after these terms; they do not exclude other elements or steps. The terms in question should be interpreted as specifying the presence of the stated features, integers, steps or components as referred to, but does not preclude the presence or addition of one or more additional features, integers, steps or components, or groups thereof. Thus, the scope of an expression such as "a device comprising means A and B" is not merely limited to devices consisting only of components A and B. What is meant, by contrast, is that with respect to the present invention, the only relevant components of the device are A and B.

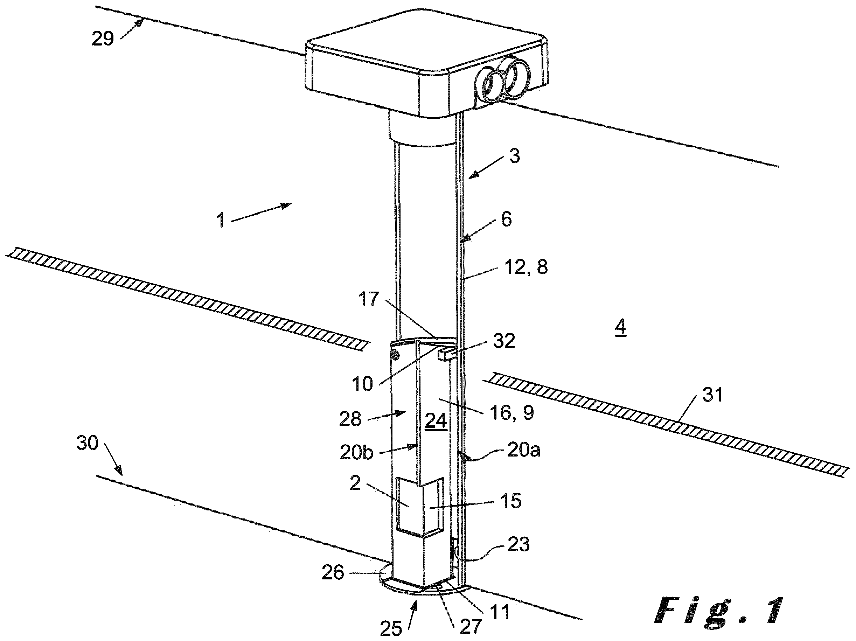

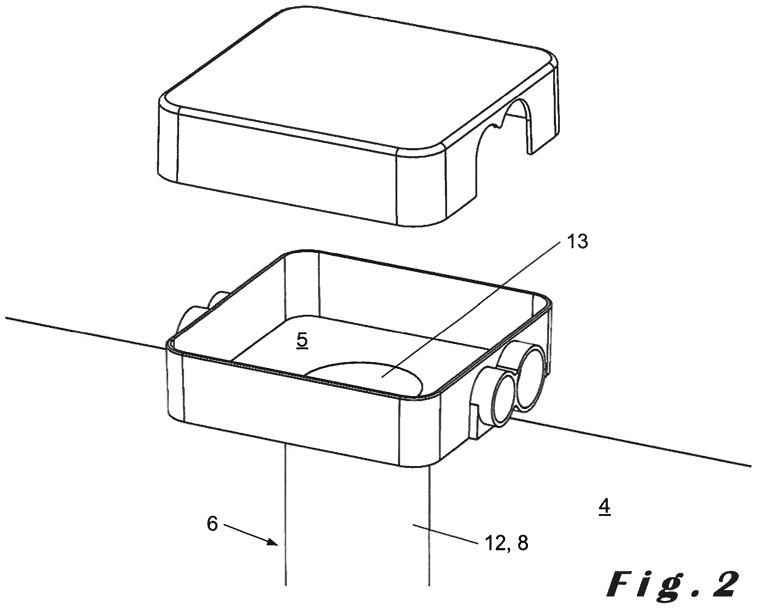

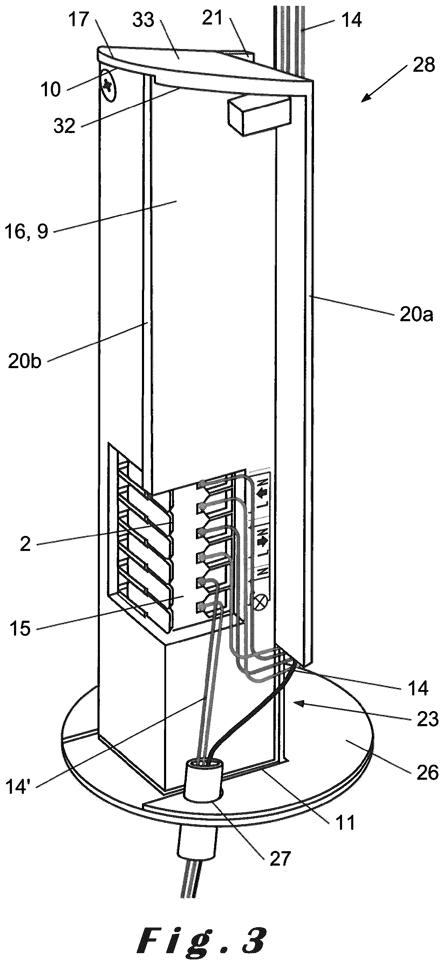

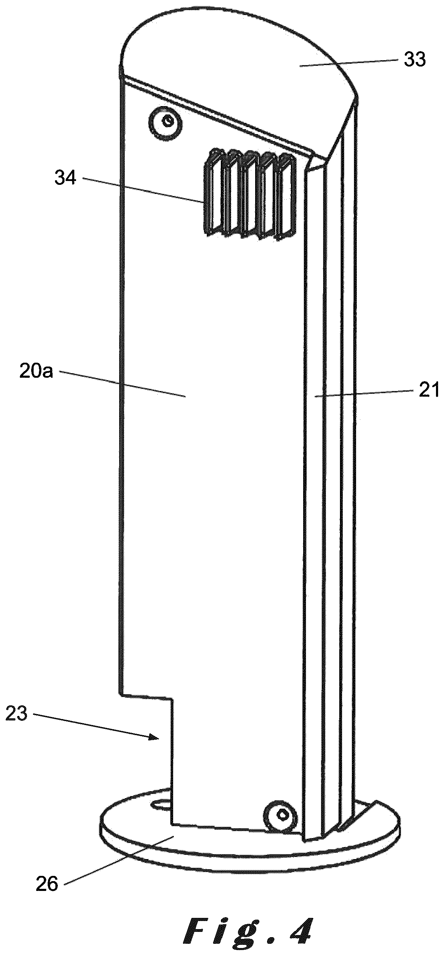

Figure 1 shows a cross section of the mounting box 1 as inserted into the naked wall 4, when no finishing layer, such as cement, has yet been applied over the top surface 29 of the wall. Hereafter, the term wall is intended to mean the naked wall 4. The wall 4 is provided with a vertical cavity 3 extending between the top surface 29 and bottom surface 30 of the wall 4. The mounting box 1 comprises an outer body 6 provided with a cylindrical sidewall 8 which is placed into the cavity 3. The sidewall 8 thereby encloses a first volume. As shown in figure 2, the outer body 6 is supported on the top surface 29 of the wall 4 by means of a flange 5 that is operationally connected to the sidewall 8 of the outer walls 12 of the outer body 6. The flange 5 can be integrally connected to the outer walls 12, but may also, for instance, be detachably connected to the outer walls 12. Detachably connecting the flange 5 offers the advantage that a standard outer wall 12 can be used, such as a standard pipe, that is cut to the desired length on location, according to the depth of the cavity 3. Moreover, or alternatively, the outer body 6 can be retained inside the cavity 3 of the wall 4 in a different way. For instance, the diameter of the cavity 3 and of the sidewall 8 of the outer body 6 may be matched in such a way that the outer body 6 is anchored by friction inside the cavity 3. Moreover, the sidewall 8 of the outer body 6 may be provided with an expansion element (not shown) which, under the influence of an action by the installer, such as the electrician, can be expanded against the sidewall of the cavity 3. Figure 2 also shows the first opening 13 arranged in the outer walls 12 of the outer body 6. After mounting the outer body 6 into the cavity 3 during the structural construction phase, the electrician can lay down electrical wires 14 (shown in figure 3) over the top surface 29 of the wall 4, to then insert them into the first volume through the first opening 13. As shown in figures 1 and 2, the outer body 6 also comprises a covering box, of which the flange 5 is a bottom surface. The covering box is placed over the first opening 13 by the electrician, for instance after the electrical wires 14 have been inserted into the first volume, and in any case before the finishing layer is applied over the top surface 29 of the wall 4. Moreover, during the structural construction phase, the electrician places the electrical device 2, such as a wirelessly controllable actuator, into the first volume. To that end, the electrical device 2 is built into an inner body 28 that protects the electrical device 2 against climatological conditions for which the electrical device 2 is not designed, for instance to which the electrical device 2 will not be exposed during most of its life span. In particular, the inner body 28 is arranged to shield the electrical device 2 from moisture and liquid such as are present at the building site during the structural construction phase. The inner body 28 is provided with inner walls 16 enclosing a second volume, into which the electrical device 2 is placed. The inner walls 16 are provided with four sidewalls 9 extending substantially along the axial direction between a top surface 10 and a bottom surface 11 to form a cuboid shaft. The shaft is closed off at the top and at the bottom by an upper wall and a lower wall, located in the top surface 10 and bottom surface 11 of the sidewalls 9, respectively. The sidewall 9 of the inner body 28 comprises an opening 15 through which, in use, the electrical wires 14 are connected to the electrical device 2, as shown in figure 3. The inner body 28 is further provided with an awning 17 provided with a bottom surface 32 and a top surface 33. The awning 17 is an integral part of the upper wall of the inner walls 16 and protrudes relative to the sidewalls 9, so as to cover the opening 15. The awning 17 is positioned in such a way in relation to the inner walls 16 that liquid reaching the inner body 28 through the first opening 13 in the outer walls 12 is led away from the opening 15 in the inner walls 16. To that end, the top surface 33 of the awning 17 forms a sloping surface. Liquid reaching the top surface 33 is lead away by means of gravity. The liquid flows to a collection point where a ledge 21 is provided, as shown in the figures 3 and 4. The ledge 21 is implemented as a protrusion extending in the axial direction, provided on one of the sidewalls 9 of the inner body 28. Liquid collecting near the ledge 17 will flow downward along the ledge 17 under the influence of adhesion and gravitational forces. Around the opening 15, there is a dry space 24. This space is substantially dryer dan the rest of the first volume due to the space being partitioned off from the first volume. To that end, the inner walls 16 of the inner body 28 are provided with closing walls 20a, 20b that, together with the awning 17 and the sidewall 8 of the outer walls 12, form the dry space 24. To that end, the free edge of the awning 17 is connected in a liquid tight way to the sidewall 8 of the outer walls 12. During installation by the electrician, the inner body 28 is inserted into the first volume of the outer body 6 through a second opening 25 in the outer walls 12 of the outer body 6. The electrician, having inserted the electrical wires 14 into the first volume, then needs to get them into the dry space 24 as well. To that end, at least one of the closing walls 20a is provided with a pass-through opening 23 through which the electrical wires 14 can be pulled. The electrician can then connect the electrical wires 14 to the electrical device 2. To make the cavity 3 invisible from the lower floor, the cavity 3 is closed off by means of a flange 26 connected to the inner walls 16 of the inner body 28, and lying in the bottom surface 11 of the sidewalls 9 of the inner body 28. In order to connect electrical wires 14' from the electrical device 2 to a user device, such as a lamp, the flange 26 is provided with a flange opening 27 through which the electrical wires 14', 14 can be pulled. The inner body 28 is inserted into the outer body 6. As shown in figure 1, the wall 4 is provided with metallic reinforcement cables 31 such as steel wires. The electrical device 2, and in particular the signal receiver of the electrical device 2, are placed below these metallic reinforcement cables 31 so as to ensure a good signal reception. Figure 4 shows the rear view of the inner body 28 of the mounting box 1. In particular, figure 4 shows the positioning of the ledge 21 at the collection point of the sloping top surface 33 of the awning 17. In order to bring the electrical wires 14 from the first volume into the dry space 24 in a structured way, one of the sidewalls 9 of the inner body 28 is provided with cable guides 34.

## Claims

1. A mounting box (1) for mounting an electrical device (2) in a substantially vertically extending cavity (3) of a wall (4), the mounting box (1) comprising:
• an outer body (6), arranged to be mounted, in use, into the cavity (3) of the wall (4), wherein the outer body (6) is provided with outer walls (12) enclosing a first volume, wherein the outer walls (12) are provided with at least one sidewall (8) extending in an axial direction, wherein the axial direction, in use, lies in the vertical direction of the cavity (3), and wherein the outer walls (12) are provided with an opening (13) facing in the axial direction in use, arranged as a passage for electrical wires (14) in the outer body (6),
• an inner body (28), arranged to be mounted, in use, into the first volume of the outer body (6), wherein the inner body (28) is provided with inner walls (16) enclosing a second volume, wherein the second volume is arranged for receiving the electrical device (2), wherein the inner walls (16) are provided with at least one sidewall (9) extending substantially along the axial direction, and wherein the at least one sidewall (9) of the inner body (28) comprises an opening (15) through which, in use, the electrical wires (14) are connected to the electrical device (2), **characterized in that** the inner body (28) is further provided with an awning (17) provided with a bottom surface (32) and a top surface (33), wherein the awning (17) is positioned in such a way relative to the inner walls (16) that liquid reaching the inner body (28) through the opening (13) in the outer walls (12) is led away from the opening (15) in the inner walls (16).

2. The mounting box (1) according to the preceding claim, wherein the at least one sidewall (9) of the inner walls (16) comprises a top surface (10) and a bottom surface (11), and wherein the bottom surface (32) of the awning (17) is supported on the top surface (10) of the sidewall (9) of the inner walls (16).

3. The mounting box (1) according to any of the preceding claims, wherein the top surface (33) of the awning (17) forms a sloping surface, the normal of which comprises at least one component perpendicular to the axial direction, wherein the sloping surface is arranged to drain off liquid towards a ledge (21) in a direction away from the opening (15) in the sidewall (9) of the inner walls (16).

4. The mounting box (1) according to the preceding claim, wherein the sidewall (9) of the inner walls (16) is provided with the ledge (21), wherein the ledge (21) extends mainly in the axial direction.

5. The mounting box (1) according to the preceding claim, wherein the ledge (21) comprises an axial groove, wherein the axial groove is provided in the sidewall (9) of the inner walls (16).

6. The mounting box (1) according to any of the preceding claims 4 - 5, wherein the ledge (21) comprises an axial protrusion, wherein the axial protrusion is provided on the sidewall (9) of the inner walls (16).

7. The mounting box (1) according to any of the preceding claims, wherein the normal of the opening (15) in the sidewall (9) of the inner walls (16) is oriented according to an opening direction and wherein the awning (17), at least in the opening direction, protrudes relative to the sidewall (9) of the inner walls (16).

8. The mounting box (1) according to any of the preceding claims, wherein the awning (17), in use, joins the outer walls (12) in a liquid tight way.

9. The mounting box (1) according to the preceding claim, wherein the inner body (28) is provided with at least one closing wall (20a, 20b) extending in the axial direction, wherein the at least one closing wall (20a, 20b) is connected to the inner walls (16) of the inner body (28), and wherein, in use, the at least one closing wall (20a, 20b) joins the outer walls (12) and the awning (17) in a liquid tight way, in such a way that a dry space (24) is created around the opening (15) in the sidewall (9) of the inner body (28), wherein the dry space (24) is separated from the rest of the first volume of the outer body (6) by at least the awning (17) and the at least one closing wall (20).

10. The mounting box (1) according to the preceding claim, wherein one of the at least one closing walls (20) is provided with a pass-through opening (23) through which, in use, the electrical wires (14) are brought into the dry space (24), wherein the pass-through opening (23) is provided at a first distance in the axial direction relative to the awning (17) and wherein the opening (15) in the sidewall (9) of the inner body (28) is provided at a second distance in the axial direction relative to the awning (17), and wherein the first distance is greater than the second distance.

11. The mounting box (1) according to any of the preceding claims, wherein the outer walls (12) of the outer body (6) comprise a second opening (25), opposite the first opening (13) of the outer walls (12), through which, in use, the inner body (28) is inserted into the outer body (6).

12. The mounting box (1) according to the preceding claim, wherein the inner walls (16) of the inner body (28) comprise a flange (26), wherein the at least one sidewall (9) of the inner walls (16) comprises a top surface (10) and a bottom surface (11), wherein the flange (26) is connected to the bottom surface (11) of the sidewall (9) of the inner body (28), wherein the flange (26), in use, closes off the second opening (25) of the outer body (6) and wherein the flange (26) is provided with a flange opening (27) which, in use, is arranged as a passage for electrical wires (14') connected to the electrical device (2).

13. The mounting box (1) according to any of the preceding claims, wherein the sidewall (8) of the outer body (6) is provided with a flange (5) at the level of the first opening (13) of the outer walls (16), and wherein, in use, the outer body (6) is retained in the cavity (3) of the wall (4) due to the flange (5) resting on the wall (4).

14. A wall (4) provided with a cavity (3) in which the mounting box (1) according to any of the preceding claims is placed.

15. Method for mounting an electrical device (2) into a cavity (3) in a wall (4), wherein the method comprises the following steps:
• providing a mounting box (1) according to any of the preceding claims 1 - 13, wherein the electrical device (2) is secured inside the inner body (28),
• working the wall (4) to form the cavity (3),
• installing the outer body (6) of the mounting box (1) into the cavity (3),
• inserting the inner body (28) into the first volume of the outer body (6),
• inserting electrical wires (14) into the first volume of the outer body and connecting the electrical wires (14) to the electrical device (2).

## Patentansprüche

1. Eine Installationsdose (1) zum Installieren einer elektrischen Vorrichtung (2) in einem sich im Wesentlichen vertikal ausdehnenden Hohlraum (3) einer Wand (4), wobei die Installationsdose (1) Folgendes umfasst:
• ein äußeres Gehäuse (6), angeordnet, um, während der Verwendung, im Hohlraum (3) der Wand (4) installiert zu werden, wobei das äußere Gehäuse (6) mit Außenwänden (12) versehen ist, welche ein erstes Volumen umschließen, wobei die Außenwände (12) mit zumindest einer Seitenwand (8) versehen sind, die sich in eine axiale Richtung ausdehnt, wobei die axiale Richtung, während der Verwendung, in der vertikalen Richtung des Hohlraums (3) liegt, und wobei die Außenwände (12) mit einer Öffnung (13) versehen sind, die während der Verwendung in die axiale Richtung weist, angeordnet als ein Durchgang für elektrische Drähte (14) im äußeren Gehäuse (6),
• ein inneres Gehäuse (28), angeordnet, um, während der Verwendung, in das erste Volumen des äußeren Gehäuses (6) installiert zu werden, wobei das innere Gehäuse (28) mit Innenwänden (16) versehen ist, welche ein zweites Volumen umschließen, wobei das zweite Volumen angeordnet ist, um die elektrische Vorrichtung (2) aufzunehmen, wobei die Innenwände (16) mit zumindest einer Seitenwand (9) versehen sind, die sich im Wesentlichen entlang der axialen Richtung ausdehnt, und wobei die zumindest eine Seitenwand (9) des inneren Gehäuses (28) eine Öffnung (15) umfasst, durch die, während der Verwendung, die elektrischen Drähte (14) mit der elektrischen Vorrichtung (2) verbunden sind, **dadurch gekennzeichnet, dass** das innere Gehäuse (28) ferner mit einer Abdeckung (17) versehen mit einer unteren Oberfläche (32) und einer oberen Oberfläche (33) versehen ist, wobei die Abdeckung (17) so in Bezug zu den Innenwänden (16) positioniert ist, dass Flüssigkeit, die das innere Gehäuse (28) über die Öffnung (13) in den Außenwänden (12) erreicht, von der Öffnung (15) in den Innenwänden (16) weg geleitet wird.

2. Die Installationsdose (1) nach dem vorigen Anspruch, wobei die zumindest eine Seitenwand (9) der Innenwände (16) eine obere Oberfläche (10) und eine untere Oberfläche (11) umfasst, und wobei die untere Oberfläche (32) der Abdeckung (17) auf der oberen Oberfläche (10) der Seitenwand (9) der Innenwände (16) unterstützt wird.

3. Die Installationsdose (1) nach irgendeinem der vorigen Ansprüche, wobei die obere Oberfläche (33) der Abdeckung (17) eine geneigte Oberfläche bildet, deren Normale zumindest eine Komponente senkrecht zur axialen Richtung umfasst, wobei die geneigte Oberfläche angeordnet ist, um Flüssigkeit zu einer Leiste (21) in einer Richtung weg von der Öffnung (15) in der Seitenwand (9) der Innenwände (16) abzuleiten.

4. Die Installationsdose (1) nach dem vorigen Anspruch, wobei die Seitenwand (9) der Innenwände (16) mit der Leiste (21) versehen ist, wobei sich die Leiste (21) vorwiegend in die axiale Richtung ausdehnt.

5. Die Installationsdose (1) nach dem vorigen Anspruch, wobei die Leiste (21) eine axiale Nut umfasst, wobei die axiale Nut in der Seitenwand (9) der Innenwände (16) bereitgestellt ist.

6. Die Installationsdose (1) nach irgendeinem der vorigen Ansprüche 4 bis 5, wobei die Leiste (21) einen axialen Überstand umfasst, wobei der axiale Überstand in der Seitenwand (9) der Innenwände (16) bereitgestellt ist.

7. Die Installationsdose (1) nach irgendeinem der vorigen Ansprüche, wobei die Normale der Öffnung (15) in der Seitenwand (9) der Innenwände (16) entsprechend einer Öffnungsrichtung ausgerichtet ist und wobei die Abdeckung (17), zumindest in der Öffnungsrichtung, in Bezug zur Seitenwand (9) der Innenwände (16) hervorragt.

8. Die Installationsdose (1) nach irgendeinem der vorigen Ansprüche, wobei die Abdeckung (17), während der Verwendung, flüssigkeitsdicht an die Außenwände (12) anliegt.

9. Die Installationsdose (1) nach dem vorigen Anspruch, wobei das innere Gehäuse (28) mit zumindest einer Verschlusswand (20a, 20b) versehen ist, welche sich in die axiale Richtung ausdehnt, wobei die zumindest eine Verschlusswand (20a, 20b) mit den Innenwänden (16) des inneren Gehäuses (28) verbunden ist, und wobei, während der Verwendung, die zumindest eine Verschlusswand (20a, 20b) flüssigkeitsdicht an die Außenwände (12) und an die Abdeckung (17) anliegt, sodass ein trockener Raum (24) rund um die Öffnung (15) in der Seitenwand (9) des inneren Gehäuses (28) gebildet wird, wobei der trockene Raum (24) vom Rest des ersten Volumens des äußeren Gehäuses (6) durch zumindest die Abdeckung (17) und die zumindest eine Verschlusswand (20) getrennt ist.

10. Die Installationsdose (1) nach dem vorigen Anspruch, wobei eine der zumindest einen Verschlusswände (20) mit einer Durchgangsöffnung (23) versehen ist, durch die, während der Verwendung, die elektrischen Drähte (14) in den trockenen Raum (24) gebracht werden, wobei die Durchgangsöffnung (23) in einem ersten Abstand in der axialen Richtung in Bezug zur Abdeckung (17) bereitgestellt ist und wobei die Öffnung (15) in der Seitenwand (9) des inneren Gehäuses (28) in einem zweiten Abstand in der axialen Richtung in Bezug zur Abdeckung (17) bereitgestellt ist, und wobei der erste Abstand größer ist als der zweite Abstand.

11. Die Installationsdose (1) nach irgendeinem der vorigen Ansprüche, wobei die Außenwände (12) des äußeren Gehäuses (6) eine zweite Öffnung (25), gegenüber der ersten Öffnung (13) der Außenwände (12), umfassen, durch die, während der Verwendung, das innere Gehäuse (28) in das äußere Gehäuse (6) eingeführt wird.

12. Die Installationsdose (1) nach dem vorigen Anspruch, wobei die Innenwände (16) des inneren Gehäuses (28) einen Flansch (26) umfassen, wobei die zumindest eine Seitenwand (9) der Innenwände (16) eine obere Oberfläche (10) und eine untere Oberfläche (11) umfasst, wobei der Flansch (26) mit der unteren Oberfläche (11) der Seitenwand (9) des inneren Gehäuses (28) verbunden ist, wobei der Flansch (26), während der Verwendung, die zweite Öffnung (25) des äußeren Gehäuses (6) abschließt und wobei der Flansch (26) mit einer Flanschöffnung (27) versehen ist, die, während der Verwendung, als ein Durchgang für elektrische Drähte (14'), verbunden mit der elektrischen Vorrichtung (2), angeordnet ist.

13. Die Installationsdose (1) nach irgendeinem der vorigen Ansprüche, wobei die Seitenwand (8) des äußeren Gehäuses (6) mit einem Flansch (5) auf dem Niveau der ersten Öffnung (13) der Außenwände (16) versehen ist, und wobei, während der Verwendung, das äußere Gehäuse (6) im Hohlraum (3) der Wand (4) aufgrund des Flansches (5), der auf der Wand (4) ruht, zurückgehalten wird.

14. Eine Wand (4) versehen mit einem Hohlraum (3), in den die Installationsdose (1) nach irgendeinem der vorigen Ansprüche eingesetzt wird.

15. Verfahren zur Installation einer elektrischen Vorrichtung (2) in einen Hohlraum (3) in einer Wand (4), wobei das Verfahren die folgenden Schritte umfasst:
• Bereitstellen einer Installationsdose (1) nach irgendeinem der vorigen Ansprüche 1 bis 13, wobei die elektrische Vorrichtung (2) innerhalb des inneren Gehäuses (28) befestigt ist,
• Bearbeiten der Wand (4), um den Hohlraum (3) zu bilden,
• Installieren des äußeren Gehäuses (6) der Installationsdose (1) im Hohlraum (3),
• Einführen des inneren Gehäuses (28) in das erste Volumen des äußeren Gehäuses (6),
• Einführen elektrischer Drähte (14) in das erste Volumen des äußeren Gehäuses und Verbinden der elektrischen Drähte (14) mit der elektrischen Vorrichtung (2).

## Revendications

1. Boîte de montage (1) pour le montage d'un dispositif électrique (2) dans une cavité s'étendant sensiblement verticalement (3) d'une paroi (4), la boîte de montage (1) comprenant :
• un corps externe (6), agencé pour être monté, en cours d'utilisation, dans la cavité (3) de la paroi (4), dans laquelle le corps externe (6) est pourvu de parois externes (12) enfermant un premier volume, dans laquelle les parois externes (12) sont pourvues d'au moins une paroi latérale (8) s'étendant dans une direction axiale, dans laquelle la direction axiale, en cours d'utilisation, se situe dans la direction verticale de la cavité (3), et dans laquelle les parois externes (12) sont pourvues d'une ouverture (13) étant face à la direction axiale en cours d'utilisation, agencée sous la forme d'un passage pour des fils électriques (14) dans le corps externe (6),
• un corps interne (28), agencé pour être monté, en cours d'utilisation, dans le premier volume du corps externe (6), dans laquelle le corps interne (28) est pourvu de parois internes (16) enfermant un second volume, dans laquelle le second volume est agencé pour recevoir le dispositif électrique (2), dans laquelle les parois internes (16) sont pourvues d'au moins une paroi latérale (9) s'étendant sensiblement le long de la direction axiale, et dans laquelle l'au moins une paroi latérale (9) du corps interne (28) comprend une ouverture (15) à travers laquelle, en cours d'utilisation, les fils électriques (14) sont connectés au dispositif électrique (2), **caractérisée en ce que** le corps interne (28) est en outre pourvu d'un auvent (17) pourvu d'une surface inférieure (32) et d'une surface supérieure (33), dans laquelle l'auvent (17) est positionné de telle manière par rapport aux parois internes (16) que le liquide atteignant le corps interne (28) à travers l'ouverture (13) dans les parois externes (12) est écarté de l'ouverture (15) dans les parois internes (16).

2. Boîte de montage (1) selon la revendication précédente, dans laquelle l'au moins une paroi latérale (9) des parois internes (16) comprend une surface supérieure (10) et une surface inférieure (11), et dans laquelle la surface inférieure (32) de l'auvent (17) est supportée sur la surface supérieure (10) de la paroi latérale (9) des parois internes (16).

3. Boîte de montage (1) selon l'une quelconque des revendications précédentes, dans laquelle la surface supérieure (33) de l'auvent (17) forme une surface inclinée, dont la normale comprend au moins une composante perpendiculaire à la direction axiale, dans laquelle la surface inclinée est agencée pour évacuer le liquide vers un rebord (21) dans une direction s'éloignant de l'ouverture (15) dans la paroi latérale (9) des parois internes (16).

4. Boîte de montage (1) selon la revendication précédente, dans laquelle la paroi latérale (9) des parois internes (16) est pourvue du rebord (21), dans laquelle le rebord (21) s'étend principalement dans la direction axiale.

5. Boîte de montage (1) selon la revendication précédente, dans laquelle le rebord (21) comprend une rainure axiale, dans laquelle la rainure axiale est pourvue dans la paroi latérale (9) des parois internes (16).

6. Boîte de montage (1) selon l'une quelconque des revendications 4-5 précédentes, dans laquelle le rebord (21) comprend une saillie axiale, dans laquelle la saillie axiale est pourvue sur la paroi latérale (9) des parois internes (16).

7. Boîte de montage (1) selon l'une quelconque des revendications précédentes, dans laquelle la normale de l'ouverture (15) dans la paroi latérale (9) des parois internes (16) est orientée selon une direction d'ouverture et dans laquelle l'auvent (17), au moins dans la direction d'ouverture, fait saillie par rapport à la paroi latérale (9) des parois internes (16).

8. Boîte de montage (1) selon l'une quelconque des revendications précédentes, dans laquelle l'auvent (17), en cours d'utilisation, relie les parois externes (12) d'une manière étanche aux liquides.

9. Boîte de montage (1) selon la revendication précédente, dans laquelle le corps interne (28) est pourvu d'au moins une paroi de fermeture (20a, 20b) s'étendant dans la direction axiale, dans laquelle l'au moins une paroi de fermeture (20a, 20b) est connectée aux parois internes (16) du corps interne (28), et dans laquelle, en cours d'utilisation, l'au moins une paroi de fermeture (20a, 20b) relie les parois externes (12) et l'auvent (17) d'une manière étanche aux liquides, d'une manière telle qu'un espace sec (24) est créé autour de l'ouverture (15) dans la paroi latérale (9) du corps interne (28), dans laquelle l'espace sec (24) est séparé du reste du premier volume du corps externe (6) par au moins l'auvent (17) et l'au moins une paroi de fermeture (20).

10. Boîte de montage (1) selon la revendication précédente, dans laquelle l'une de l'au moins une paroi de fermeture (20) est pourvue d'une ouverture traversante (23) à travers laquelle, en cours d'utilisation, les fils électriques (14) sont amenés dans l'espace sec (24), dans laquelle l'ouverture traversante (23) est pourvue à une première distance dans la direction axiale par rapport à l'auvent (17) et dans laquelle l'ouverture (15) dans la paroi latérale (9) du corps interne (28) est pourvue à une seconde distance dans la direction axiale par rapport à l'auvent (17), et dans laquelle la première distance est supérieure à la seconde distance.

11. Boîte de montage (1) selon l'une quelconque des revendications précédentes, dans laquelle les parois externes (12) du corps externe (6) comprennent une seconde ouverture (25), opposée à la première ouverture (13) des parois externes (12), à travers laquelle, en cours d'utilisation, le corps interne (28) est inséré dans le corps externe (6).

12. Boîte de montage (1) selon la revendication précédente, dans laquelle les parois internes (16) du corps interne (28) comprennent une bride (26), dans laquelle l'au moins une paroi latérale (9) des parois internes (16) comprend une surface supérieure (10) et une surface inférieure (11), dans laquelle la bride (26) est connectée à la surface inférieure (11) de la paroi latérale (9) du corps interne (28), dans laquelle la bride (26), en cours d'utilisation, ferme la seconde ouverture (25) du corps externe (6) et dans laquelle la bride (26) est pourvue d'une ouverture (27) de bride qui, en cours d'utilisation, est agencée sous la forme d'un passage pour des fils électriques (14') connectés au dispositif électrique (2).

13. Boîte de montage (1) selon l'une quelconque des revendications précédentes, dans laquelle la paroi latérale (8) du corps externe (6) est pourvue d'une bride (5) au niveau de la première ouverture (13) des parois externes (16), et dans laquelle, en cours d'utilisation, le corps externe (6) est retenu dans la cavité (3) de la paroi (4) en raison de la bride (5) reposant sur la paroi (4).

14. Paroi (4) pourvue d'une cavité (3) dans laquelle la boîte de montage (1) selon l'une quelconque des revendications précédentes est placée.

15. Procédé pour le montage d'un dispositif électrique (2) dans une cavité (3) dans une paroi (4), dans lequel le procédé comprend les étapes suivantes :
• fourniture d'une boîte de montage (1) selon l'une quelconque des revendications 1 à 13 précédentes, dans laquelle le dispositif électrique (2) est fixé à l'intérieur du corps interne (28),
• travail de la paroi (4) pour former la cavité (3),
• installation du corps externe (6) de la boîte de montage (1) dans la cavité (3),
• insertion du corps interne (28) dans le premier volume du corps externe (6),
• insertion de fils électriques (14) dans le premier volume du corps externe et connexion des fils électriques (14) au dispositif électrique (2).
